# EUROPÄISCHE PATENTANMELDUNG

(11) **EP 0 722 759 A2**
(43) Veröffentlichungstag der Anmeldung: **24.07.1996**
(21) Anmeldenummer: 96100501.4
(22) Anmeldetag: 16.01.1996
(51) Int. Cl.: B01D 8/00

(54) **Vorrichtung zur Kühlung gasförmiger Medien und Verfahren unter Verwendung der Vorrichtung**

(30) Priorität: 19.01.1995 DE 19501400
(71) Anmelder: BRESCH ENTSORGUNG GmbH, D-24539 Neumünster (DE)
(72) Erfinder: Landahl, Claus-Dieter, D-24626 Gross-Kummerfeld (DE); Landahl, Horst, D-22339 Hamburg (DE)

(57) **Zusammenfassung**

Die vorliegende Erfindung betrifft eine Vorrichtung zur Kühlung gasförmiger Medien, welche wenigstens ein Rohr mit Umlenkung aufweist, durch das Kälteträgermedium fließt, wobei dieses in einem Doppelmantelzylinder angeordnet ist, welcher Leitbleche im Inneren des Zylinders aufweist. Die vorliegene Erfindung betrifft femer ein Verfahren unter Verwendung der Vorrichtung.

## Beschreibung

Die vorliegende Erfindung betrifft eine Vorrichtung zur Kühlung gasförmiger Medien, welche wenigstens ein Rohr mit Umlenkung aufweist, durch das Kälteträgermedium fließt, wobei dieses in einem Doppelmantelzylinder angeordnet ist, welcher Leitbleche im Inneren des Zylinders aufweist. Die vorliegene Erfindung betrifft ferner ein Verfahren unter Verwendung der Vorrichtung.

Kühlapparate sind in großer Zahl bekannt. Zum umfangreichen Stand der Technik wird daher auf die einschlägige Fachliteratur verwiesen.

Die erfindungsgemäße Vorrichtung dient zur Kühlung gasfömiger Medien und ist dadurch gekennzeichnet, daß sie wenigstens ein Rohr mit Umlenkung zum Durchfluß eines Kälteträgermediums aufweist, wobei das Rohr mit Umlenkung in einem doppelwandigen Apparat angeordnet ist, welcher Zuführungen für zu kühlendes Medium in den Innenraum des Apparates aufweist, wobei quer zur Strömungsrichtung des zu kühlenden Mediums Leitbleche angeordnet sind und wobei der Apparat einen Abfluß für flüssiges Medium im unteren Bereich aufweist und einen im unteren Bereich des Apparates offenen, von den Doppelwänden begrenzten Zwischenraum aufweist, durch den gasförmiges Medium zu Abführungen nach außen fließen kann.

Obgleich beliebige Gase oder Gasgemische in der Vorrichtung gekühlt werden können, ist diese besonders geeignet zum Kondensieren von Fluor enthaltenden Kohlenwasserstoffen, welche sich gasförmig im Gemisch mit anderen Gasen, insbesondere im Gemisch mit Luft befinden.

Es ist dem Fachmann bekannt, daß Fluorchlorkohlenwasserstoffe weit verbreitete Treibgase zur Herstellung von Schäumen, insbesondere Polyurethanschaum bzw. Polyurethan-Hartschaum, sind.

Ein sehr verbreitetes Treibgas ist das Trichlorfluormethan, das auch als R11 bezeichnet wird.

Als weitere Fluor enthaltende Kohlenwasserstoffe seien genannt: Dichlordifluormethan, Chlordifluormethan, 1.1.1 .-Trifluor-2-fluorethan, Trifluormethan, 1.1.1 .-Trifluor-3.3.3.-trifluor-2-fluorpropan, 1.1.1.-Trifluor-2.2.-difluorethan, Difluormethan und 111Trifluorethan, ohne den Anspruch auf Vollständigkeit zu erheben.

Fluor enthaltende Kohlenwasserstoffe, insbesonder Fluor und Chlor enthaltende Kohlenwasserstoffe schädigen die Ozonschicht in der Stratosphäre. Es ist daher eine sehr wichtige Maßnahme zum Schutz der Umwelt, den Austritt der genannten Verbindungen in die Atmosphäre zu verhindern. In der Bundesrepublik Deutschland wurden daher Verfahren entwickelt, um das in Polyurethanschäumen vorhandene Treibgas möglichst vollständig durch Zermahlen freizusetzen und durch Kondensation zu sammeln.

Die erfindungsgemäße Vorrichtung hat sich aufgrund der speziellen Konstruktion zur praktisch vollständigen Kondensation der in einem Gasstrom befindlichen FCKW's bewährt, insbesondere zur vollständigen Kondensation von R11.

Die Vorrichtung ist ein Apparat, der bevorzugt zylinderförmig ist, jedoch auch andere Formen des Apparates, z.B. eine viereckige, rechteckige, eliptische und andere sind möglich. Im Inneren des Apparates ist wenigstens ein Rohr mit Umlenkung angeordnet, durch welches ein Kälteträgermedium fließt. Im allgemeinen sind mehrere Rohr mit Umlenkung in dem Apparat angeordnet, bevorzugt 4 bis 10 Rohre.

Die Rohre mit Umlenkung weisen bevorzugt eine möglichst große Oberfläche auf, z.B. durch Ausbildung als Rippenrohre. Sie bestehen bevorzugt aus Materialien, welche eine hohe Wärmeleitfähigkeit aufweisen. Bevorzugt sind z.B. Kupferrohre, jedoch auch andere Materialien wie Stahl, Edelstähle, Aluminium usw. können eingesetzt werden. Im allgemeinen weisen die Rohre nur eine Umlenkung auf, d.h. sie haben eine U-Form. Sie können erfindungsgemäß jedoch auch mehrere Umlenkungen aufweisen.

Länge und Durchmesser der Rohre sind abhängig von dem vorgesehenen Durchsatz. Beispielhaft sei eine Anlage betrachtet, in der Polyurethanschaum aus 100.000 Kühlschränken/Jahr aufgearbeitet wird. Bei diesem Beispiel weist eine Kühlvorrichtung 8 Rohre mit jeweils einer Umlenkung (U-Rohr) auf, wobei die Rohre jeweils eine Gesamtlänge von 3 bis 4 m aufweisen und einen Durchmesser von 10 bis 15 mm. Bezüglich der Abmessungen der Rohre mit Umlenkung besitzt der Fachmann jedoch einen weiten Spielraum bezüglich Länge und Durchmesser, wobei je nach vorgesehenem Durchsatz die geeigneten Abmessungen gewählt werden.

In die Rohre wird bei senkrecht stehenden U-Rohren das Kälteträgermedium durch bevorzugt oben angeordnete Zuführungen eingespritzt. Die Ausgänge befinden sich bevorzugt ebenfalls im oberen Teil des Appartes. Bevorzugt wird an diesen das Kälteträgermedium abgesaugt, wobei die einzelnen Ausgänge zu einem einzigen Ausgang zusammengefaßt werden können. Der Apparat, in dem die Rohre angeordnet sind, besteht im allgemeinen aus Stahl, er kann jedoch auch aus anderen Materialien wie Edelstahl, Aluminium, Glas, Kupfer, Verbundwerkstoffen und dergleichen bestehen. Der Apparat ist doppelwandig ausgebildet. Um die Rohre fließt innerhalb des Apparates das zu kühlende Gas bzw. Gasgemisch.

Bevorzugt wird dieses ebenfalls dem Apparat im oberen Teil zugeführt.

Das Gas fließt um die Rohre herum und tritt nach Abkühlung und Kondensation des im Gasgemisch vorhandenen FCKW in den Raum zwischen Innen- und Außenwandung ein und strömt aus dem Zwischenraum nach außen.

Für den Fachmann ist klar, daß die Strömungsführung auch anders gestaltet werden kann, daß z.B. das zu kühlende Gas im Gegenstrom zum Kälteträgermedium fließt.

Um eine starke Durchmischung und Diffusion zu den Kühlrohren herbeizuführen, enthält der Apparat Leitbleche. Diese sind quer zur Strömungsrichtung angeordnet, wobei jedoch eine rechtwinklige Ausrichtung der Leitbleche zur Rohrrichtung nicht zwingend erforderlich ist, sondern die Leitbleche können auch in Winkeln zur Rohrrichtung angeordnet sein. Im einfachsten Fall, der erfindungsgemäß bevorzugt ist, sind die Leitbleche flächenartige Bleche, die einen Teil des Apparatedurchmessers abdecken, bevorzugt den halben Durchmesser. Die Anzahl der Leitbleche ist in weitem Umfang frei wählbar, so kann der Apparat 4 bis 10 Leitbleche, je nach Größe aber auch mehr oder weniger aufweisen. Die Leitbleche sind bevorzugt jeweils gegenüber dem benachbarten Leitblech auf der gegenüberliegenden Seite des Apparates angeordnet, so daß das zu kühlende Gas an jedem Leitblech auf die gegenüberliegende Seite des Apparates gelenkt wird. Die Leitbleche können an den Rohren, die durch sie hindurchtreten und an der Innenwand des Apparates dicht anliegen, es können sich jedoch auch Spalte zwischen Rohre und Wand einerseits und Leitblech andererseits befinden. Auch die Leitbleche können aus den bereits genannten Materialien bestehen, wie z.B. aus Stahl oder Edelstahl.

Im unteren Teil besitzt der Apparat einen Ausgang, durch den kondensierter FCKW in einen Sammelbhälter abfließen kann.

Die vorliegende Erfindung betrifft auch ein Verfahren unter Verwendung der erfindungsgemäßen Vorrichtung.

Beispielhaft wird zur Kondensation von R11 ein Kälteträgermittel, das eine Temperatur von - 55 bis - 115 °C, bevorzugt von - 60 bis - 80 °C aufweist, in die Rohre mit Umlenkung geleitet. Als Kälteträgermedium können übliche Kältemittel, wie z.B. Trifluorchlormethan, Trichlorfluormethan u.a. eingesetzt werden, bevorzugt ist jedoch Trifluormethan.

Ein Gemisch von R11 in Luft gelangt über eine Zuführung, die bevorzugt im oberen Teil des Apparates angeordnet ist, in den Innenraum des Apparates und fließt von oben nach unten um die Rohr mit Umlenkung und um die Leitbleche herum. Hierbei kondensiert der FCKW, insbesonder R11, praktisch vollständig aus.

Die Konzentration des R11 in der Luft kann stark variieren. Die erfindungsgemäße Vorrichtung stellt sicher, daß auch aus Gasgemischen mit geringen FCKW-Konzentrationen, z.B. 0,5 bis 10 Gew.-% oder hohen Konzentrationen, wie 80 bis 90 Gew.-% der FCKW praktisch vollständig auskondensiert.

Die Eintrittstemperatur des R11/Luft-Gemisches kann z.B. bei 0 bis 20 °C liegen, bevorzugt 5 bis 10 °C. Ein vergleichsweise kaltes Eintrittsgas ist bevorzugt. Das FCKW-freie Gas, z.B. Luft, strömt nun durch den Zwischenraum des Doppelmantels und wird, um noch Spuren an FCKW's zu entfernen, bevorzugt über ein Aktivkohlefilter geleitet.

Der besondere Vorteil der erfindungsgemäßen Vorrichtung bzw. des erfindungsgemäßen Verfahrens liegt darin, daß aus sehr unterschiedlichen FCKW-Konzentrationen in anderen Gasen, insbesondere in Luft, FCKW oder auch andere kondensierbare Gase praktisch vollständig auskondensiert werden.

Der kondensierte FCKW kann über eine Entnahmevorrichtung, wie z.B. ein geeignetes Ventil, unten aus dem Kühlapparat entnommen werden und in Behälter abgefüllt werden.

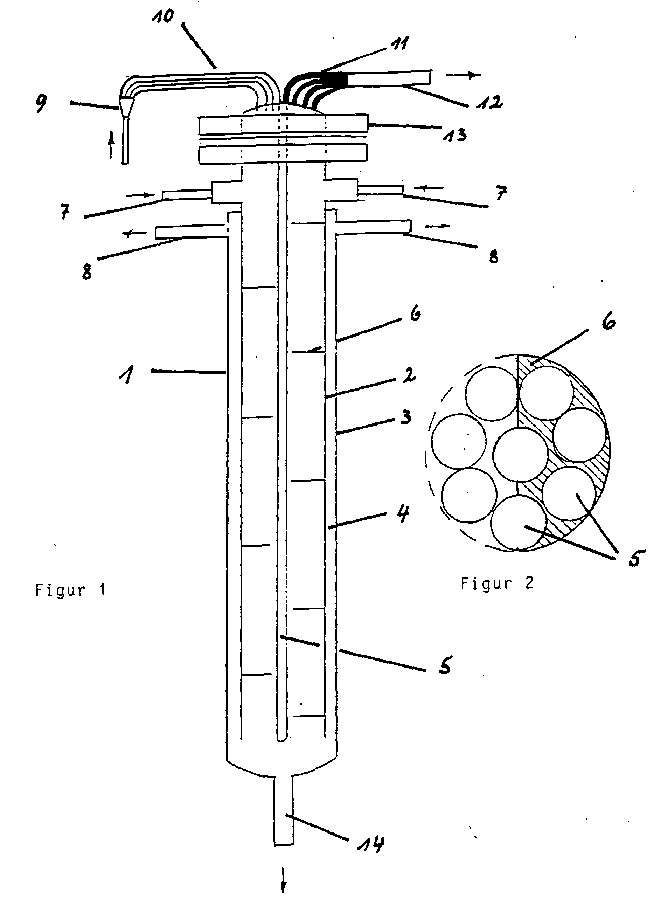

Der Druck in der erfindungsgemäßen Vorrichtung liegt bevorzugt bei Normaldruck, er kann jedoch auch unter Normaldruck oder über Normaldruck, wie z.B. 1 bis 10 bar, liegen. Erfindungsgemäß ist auch eine Anordnung aus mehreren erfindungsgemäßen Vorrichtungen möglich, die parallel oder hintereinander geschaltet sein können. Die erfindungsgemäße Vorrichtung wird mit Hilfe der Figuren 1 und 2 näher erläutert.

Figur 1 stellt eine Seitenansicht der Vorrichtung dar.
Figur 2 stellt einen Querschnitt der Vorrichtung dar.

In Figur 1 ist 1 der doppelwandige Apparat, 2 ist die Innenwand des Apparates, 3 die Außenwand, 4 der Zwischenraum zwischen Innen- und Außenwand. 5 ist ein Rohr mit Umlenkung, 6 ist ein Leitblech. 7 sind Zuführungen in den Innenraum des Zylinders. 8 sind Ableitungen von Gas, aus dem FCKW auskondensiert ist. 9 ist ein Verteiler. 10 sind Zuführungen zu den Rohren mit Umlenkung. 11 sind Ableitungen für das Kälteträgermedium, das in 12 zusammengeführt wird. 13 ist der Verschluß des doppelwandigen Apparates und 14 ist die Ableitung für kondensierten FCKW.

in Figur 2 ist 5 wiederum ein Rohr mit Umlenkung und 6 ein Leitblech.

## Patentansprüche

1. Vorrichtung zur Kühlung gasförmiger Medien, dadurch gekennzeichnet, daß diese wenigstens ein Rohr mit Umlenkung zum Durchfluß eines Kälteträgermediums aufweist, wobei das Rohr mit Umlenkung in einem doppelwandigem Apparat angeordnet ist, welcher Zuführungen für zu kühlendes gasfömiges Medium in den Innenraum des Apparates aufweist und welcher quer zur Strömungsrichtung des zu kühlenden Mediums Leitbleche aufweist, wobei der Apparat einen Abfluß für flüssiges Medium im unteren Bereich aufweist und einen im unteren Bereich des Apparates offenen, von den Doppelwänden begrenzten Zwischenraum aufweist, durch den gasförmiges Medium zu Abführungen nach außen fließen kann.

2. Vorrichtung nach Anspruch 1, dadurch gekennzeichnet, daß das U-Rohr im oberen Bereich eine Zuführung und eine Abführung für Kälteträgermedium aufweist.

3. Vorrichtung nach wenigstens einem der Ansprüche 1 und 2, dadurch gekennzeichnet, daß diese 4 bis 10 Rohre mit Umlenkung aufweist.

4. Vorrichtung nach wenigstens einem der Ansprüche 1 bis 3, dadurch gekennzeichnet, daß sich Zuführung und Abführung für zu kühlendes Medium im oberen Bereich des Apparates befinden.

5. Vorrichtung nach wenigstens einem der Ansprüche 1 bis 4, dadurch gekennzeichnet, daß sich die Leitbleche jeweils über den halben Apparatequerschnitt erstrecken.

6. Vorrichtung nach wenigstens einem der Ansprüche 1 bis 5, dadurch gekennzeichnet, daß das einem Leitblech folgende Leitblech jeweils auf der gegenüberliegenden Seite des Apparatequerschnitts angeordnet ist.

7. Verfahren zur Kühlung gasförmiger Medien unter Verwendung der Vorrichtung nach den Ansprüchen 1 bis 6.

8. Verfahren nach Anspruch 7, dadurch gekennzeichnet, daß ein FCKW/Luft-Gemisch soweit gekühlt wird, daß FCKW kondensiert.

9. Verfahren nach wenigstens einem der Ansprüche 7 und 8, dadurch gekennzeichnet, daß Trichlorfluormethan (R11) auskondensiert wird.

10. Verfahren nach wenigstens einem der Ansprüche 7 bis 9, dadurch gekennzeichnet, daß als Kältemittel Trifluormethan verwendet wird.
